# FASCICULE DE BREVET EUROPEEN

(11) **EP 2 045 120 B1**
(45) Date de publication et mention de la délivrance du brevet: **15.09.2010**
(21) Numéro de dépôt: 08164129.2
(22) Date de dépôt: 11.09.2008
(51) Int. Cl.: B60N 2/20, B60N 2/36, B60N 2/44, B60N 2/70

(54) **Garnissage pour siège automobile repliable comportant des bourrelets latéraux rétractables**
Überzug für klappbaren Fahrzeugsitz, der mit einklappbaren seitlichen Sitzpolstern ausgestattet ist
Trim for a folding automobile seat comprising retractable lateral pads

(30) Priorité: 04.10.2007 FR 0758072
(43) Date de publication de la demande: 08.04.2009
(73) Titulaire: PEUGEOT CITROËN AUTOMOBILES S.A., 78140 Vélizy Villacoublay (FR)
(72) Inventeur: Launay, Christian, 9220 Bagneux (FR)

(56) Documents cités:
- FR-A- 2 893 278
- GB-A- 2 431 340
- US-A- 2 589 901
- US-A1- 2005 093 355

## Description

La présente invention concerne un garnissage pour dossier repliable de siège automobile.

Les automobiles peuvent comporter des sièges arrière dont le dossier peut se replier sur l'assise, pour venir sensiblement à l'horizontal et dégager un espace permettant un volume de chargement important. On cherche notamment à réaliser des sièges dont l'encombrement en hauteur une fois repliés, soit le plus réduit possible pour qu'ils s'intègrent au mieux dans le plancher du véhicule, afin de proposer un plancher pratiquement plat offrant les meilleures facilitées pour le chargement.

En particulier ces sièges sont utilisés dans des véhicules appelés « monospace » comprenant deux rangées de sièges arrières pouvant être repliés, qui offrent ainsi un grand volume de chargement.

Les sièges automobiles comportent généralement des bourrelets latéraux de maintien, qui viennent en saillie vers l'avant par rapport à la partie centrale sensiblement plane sur laquelle les passagers appuient leur dos. Ces bourrelets réalisent un maintien latéral du passager dans les virages notamment, lui permettant en restant calé au fond du dossier d'être maintenu pour éviter de glisser latéralement. Les bourrelets latéraux sont des éléments importants pour le confort et la sécurité des passagers.

En contrepartie ces bourrelets latéraux comportant une certaine hauteur, augmentent l'épaisseur totale du dossier ce qui accroît aussi l'encombrement global du siège une fois le dossier replié sur l'assise.

Un dispositif connu pour réduire l'épaisseur du dossier replié, est décrit notamment dans le document US-A1-2005/009335 correspondant au préambule de la revendication indépendante. Il présente un dossier dont la base est articulée, comprenant un système de câbles liés à l'articulation, qui exercent une traction lors de l'ouverture du dossier pour déployer des bourrelets latéraux. A l'inverse quand le dossier se referme, les câbles se détendent et les bourrelets se réduisent ce qui permet de diminuer l'encombrement du dossier.

Un problème principal posé par ce dispositif est que les tissus recouvrant le dossier et formant la coiffe, peuvent présenter une fois le dossier refermé des plis dus à la réduction des bourrelets, le tissu alors trop large étant détendu. Ces plis posent des problèmes de finition, ils peuvent aussi provoquer une usure prématurée du tissu.

Nous connaissons également le document US2589901 qui décrit une assise de siège comportant une matelassure recouverte d'une coiffe en tissu, Associée à un dispositif afin de tendre la coiffe ou bien de la rétracter. Le dispositif comprend à l'arrière de l'assise quatre barrettes munies de picots insérés dans la bordure de la coiffe et placées sur le bord du contour de l'assise de forme sensiblement rectangulaire. Des biellettes fixées sur les médiatrices des barrettes périphériques, sont reliées par des ressorts de traction ou d'un système de tension vis et écrou afin d'exercer un effort d'attraction entres les barrettes placées en vis-à-vis et tendre régulièrement la coiffe placées sur la face de l'assise. A l'inverse, il suffit de détendre les ressorts ou le système de tension vis et écrou afin de rétracter la coiffe.

La présente invention a en particulier pour but d'apporter au montage d'une garniture sur un dossier comprenant des bourrelets rétractables, une solution simple, efficace et économique, assurant une bonne finition du siège déplié comme replié.

Elle propose à cet effet un siège en particulier pour véhicule automobile, comprenant un dossier fixé à l'assise du siège par une articulation permettant de replier ce dossier sur l'assise, le dossier comprenant des bourrelets latéraux de maintien du passager qui dépassent vers l'avant de la partie centrale du dossier pour former des parties saillantes, ce dossier comportant un mécanisme lié à l'articulation qui réalise une réduction des bourrelets lors du repliage du dossier, caractérisé en ce que les bourrelets latéraux sont recouverts d'une coiffe en tissu, comportant un moyen de rétractation de cette coiffe lors de la réduction des bourrelets.

Un avantage essentiel du siège selon l'invention, est qu'il peut assurer de manière automatique lors du repliage du dossier, simultanément la réduction des bourrelets et la rétractation de sa coiffe, assurant ainsi une bonne finition à l'ensemble.

Les caractéristiques complémentaires énumérées ci-aprés font l'objet des revendications dépendantes.

Avantageusement le dossier comprend une armature fixe, et une armature mobile placée vers l'avant et supportant les bourrelets latéraux, cette armature mobile s'éloignant de l'armature fixe lorsque le dossier du siège est déplié.

Selon un mode de réalisation de l'invention, les moyens de rétractation comprennent des tendeurs élastiques fixés à l'intérieur de la coiffe sur des parties latérales situées de part et d'autre du dossier, ces tendeurs reliant ensemble les deux côtés de cette coiffe avec une pré-tension.

Les tendeurs élastiques peuvent être fixés de chaque côté de la coiffe selon une ligne de fixation suivant le plan du dossier, les tendeurs élastiques passant entre les deux armatures fixe et mobile.

Les tendeurs élastiques peuvent comporter deux parties chacune fixée à un côté de la coiffe, ces deux parties étant reliées ensemble par une agrafe au cours du montage de la coiffe.

Le dossier peut comprendre deux tendeurs élastiques répartis sensiblement à chaque tiers de la hauteur du dossier.

Suivant une variante, les tendeurs élastiques sont liés à la coiffe, par un fourreau de renfort comprenant une bande fixée à l'intérieur de la coiffe, sur des parties latérales situées de part et d'autre du dossier.

Selon un autre mode de réalisation de l'invention, la coiffe comprend au moins pour les parties latérales du dossier, une matière extensible.

La matière extensible peut être un tissu recevant une enduction de matière plastique.

Avantageusement, l'assise du siège est reliée au plancher du véhicule par un dispositif de fixation articulé, réalisant pendant le repli du dossier un abaissement de cette assise de manière à la rapprocher du plancher.

L'invention sera mieux comprise et d'autres caractéristiques et avantages apparaîtront plus clairement à la lecture de la description ci-après donnée à titre d'exemple en référence aux dessins annexés dans lesquels :
- les figures 1 a et 1 b sont des vues respectivement en perspective et de profil, d'un siège comportant un dossier déplié ;
- les figures 2a et 2b sont des vues respectivement en perspective et de profil, d'un siège comportant un dossier en cours de repliage ;
- les figures 3a et 3b sont des vues respectivement en perspective et de profil, d'un siège comportant un dossier replié ;
- la figure 4 est une vue de face d'un dossier selon l'invention, suivant une première variante ;
- les figures 5a et 5b sont des vues en demi-coupe du dossier présenté figure 4, respectivement avec un bourrelet déployé et un bourrelet réduit ;
- la figure 6 présente un premier mode d'accrochage de tendeurs élastiques sur la coiffe ;
- la figure 7 présente un deuxième mode d'accrochage de tendeurs élastiques sur la coiffe ;
- les figures 8a et 8b sont des vues en demi-coupe d'un dossier selon l'invention et suivant une deuxième variante, respectivement avec un bourrelet déployé et un bourrelet réduit.

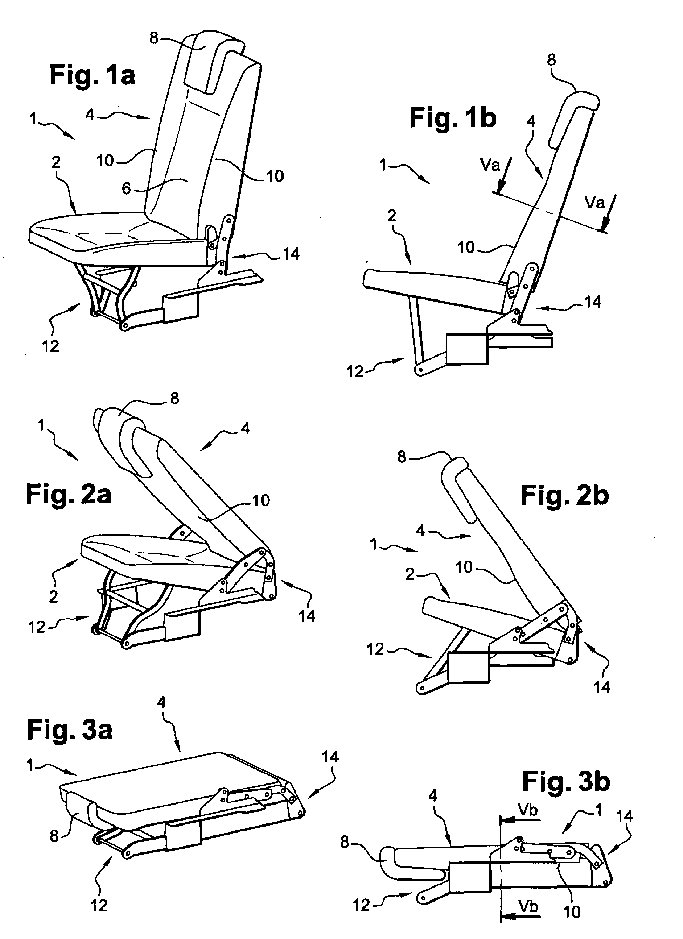

Les figures 1a et 1b présentent un siège 1 pour véhicule automobile, comprenant une assise 2 fixée au plancher du véhicule par un dispositif de fixation articulé 12, et un dossier 4 lié à l'assise par une articulation 14.

Le dossier 4 comprend une large partie centrale 6 sur laquelle s'appuie le dos du passager, un appui-tête 8 situé au sommet de la partie centrale, et deux bourrelets latéraux 10 s'étendant sensiblement sur toute la hauteur du dossier, qui dépassent de la partie centrale vers l'avant pour former des parties saillantes réalisant un maintien latéral du dos du passager.

Les figures 2a et 2b présentent le siège 1 avec un dossier 4 en position à moitié repliée, les figures 3a et 3b avec le dossier 4 en position complètement repliée, ce dossier venant pratiquement à l'horizontal en appui sur l'assise 2 pour présenter un encombrement en hauteur minimal.

On notera que pendant le repliage du dossier 4, le dispositif de fixation articulé 12 de l'assise 2 sur le plancher, subit un mouvement provoquant un abaissement de l'assise de manière à se rapprocher du plancher, pour que le siège ainsi replié soit le plus bas possible.

On notera aussi que pendant le repliage du dossier 4, l'épaisseur des bourrelets 10 se réduit, particulièrement dans leur partie inférieure, passant d'une épaisseur maximale présentée dans les figures 1 à une épaisseur minimale présentée dans les figures 3. Les bourrelets 10 comportent un mécanisme lié à l'articulation du dossier 14, provoquant un déploiement de ces bourrelets pendant le dépliage du dossier 4, ou une réduction pendant le repliage de ce dossier.

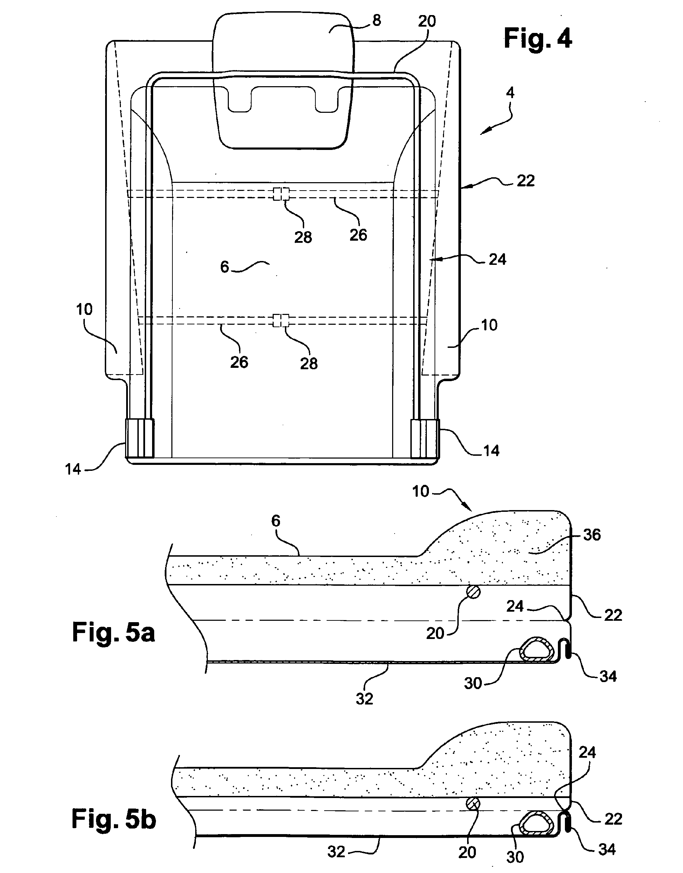

Les figures 4, 5a et 5b présentent un dossier 4 fixé par les articulations 14 à l'assise non représentée, comprenant deux bourrelets latéraux 10. Le dossier comprend deux armatures tubulaires sensiblement superposées qui font chacune le tour du dossier : une armature fixe 30 et une armature mobile 20. L'armature mobile 20 est recouverte d'une mousse 36, elle-même recouverte d'une coiffe de garnissage, assurant un bel aspect ainsi que le confort.

Lors du dépliage du dossier 4, l'armature mobile 20 comportant deux parties latérales soutenant chacune un bourrelet 10 suivant la longueur, a sa partie basse proche de l'articulation 14 qui s'écarte de l'armature fixe 30. De cette manière, les bourrelets 10 s'écartent de la partie arrière du dossier pour se déployer.

La garniture du dossier 4 comporte une coiffe avant 22 en tissu qui recouvre les parties avant et latérales du dossier, et une coiffe arrière 32 recouvrant la partie arrière du dossier, ces deux coiffes étant reliées ensemble par une liaison 34 située à proximité de l'armature fixe 30.

Le dossier 4 comporte de plus une paire supérieure et une paire inférieure de sangles élastiques 26, disposées horizontalement et réparties sensiblement à chaque tiers de la hauteur du dossier, ces sangles élastiques passant entre les armatures fixe 30 et mobile 20. Chaque sangle élastique pour chaque paire de sangles 26, est fixée de chaque côté du dossier à l'intérieur de la coiffe avant 22 sur une ligne de fixation 24. Les deux sangles de chaque paire sont ensuite reliées ensemble et légèrement tendues par une agrafe 28, après le montage de la coiffe sur le dossier 4.

Le fonctionnement du dossier suivant l'invention est le suivant. Lors du repliage du dossier 4, l'armature mobile 20 à l'origine en position éloignée présentée figure 5a, se rapproche de l'armature fixe 30 pour finir en position présentée figure 5b, les bourrelets 10 se réduisent en même temps. Lors de ce mouvement, les sangles élastiques 26 exercent une traction continue sur les lignes de fixation 24 de la coiffe avant, ces lignes étant situées sensiblement au milieu entre les deux armatures fixe 30 et mobile 20. Le tissu de la coiffe avant 22 se replie progressivement vers le centre du dossier 4, pour former à la fin un pli régulier suivant la ligne de fixation 24, qui suit le plan du dossier.

Le dossier 4 étant complètement replié, les deux lignes de fixation 24 viennent comme indiqué figure 4 suivant deux droites légèrement obliques, le bourrelet 10 se rétractant plus en bas qu'en haut, ces lignes de fixation rentrent en bas plus vers l'axe du dossier.

Pour le dossier suivant l'invention, l'aspect reste toujours propre, la coiffe étant tendue en permanence sans faux pli. La tension régulière et l'absence de faux pli fait travailler de manière régulière le tissu, et évite aussi une usure prématurée de la coiffe. Cette variante de dossier comportant des sangles élastiques permet d'utiliser pour la coiffe avant 22 un tissu peu élastique.

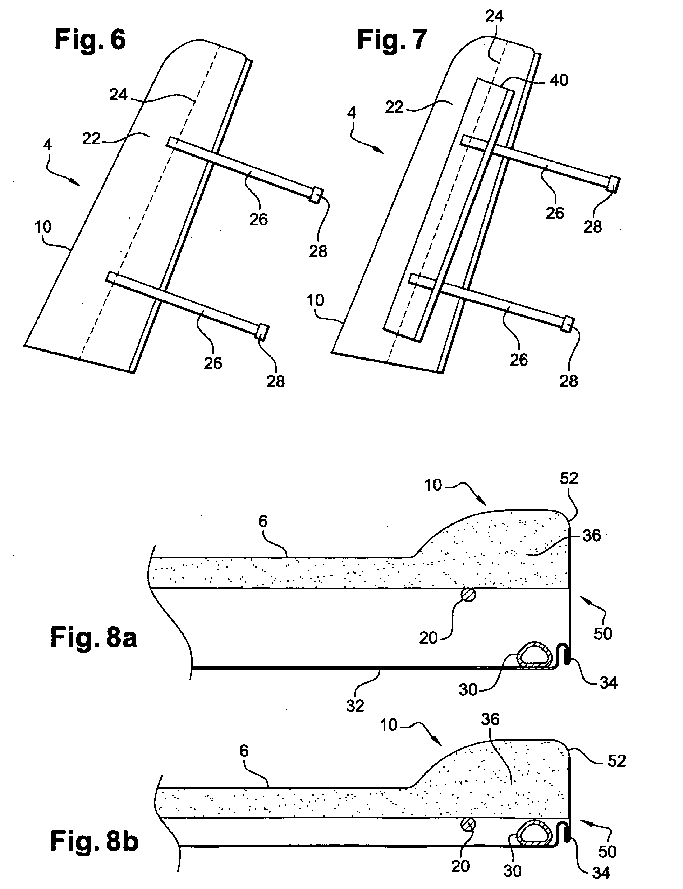

La figure 6 présente un premier mode d'accrochage des sangles élastiques 26 sur la coiffe avant 22, ils sont directement cousus sur cette coiffe et tirent en deux points particuliers situés sur la ligne de fixation 24.

La figure 7 présente un deuxième mode d'accrochage des élastiques 26 sur la coiffe avant 22, par l'intermédiaire d'un fourreau 40 lui-même cousu sur la coiffe avant suivant la ligne de fixation 24. Ce fourreau 40 comporte une bande souple formant une pièce intermédiaire résistante, qui permet de répartir l'effort de traction des sangles élastiques 26 sur une longueur importante de la ligne de fixation 24.

Les figures 8a et 8b présentent un dossier suivant une variante comprenant au moins pour les parties latérales 50 des coiffes avant 52, un tissu élastique. De cette manière lorsque le dossier 4 est replié, le bourrelet 10 se réduit et la partie latérale 50 de la coiffe qui était tendue au préalable, se rétracte pour absorber la variation de largeur et conserver un aspect lisse et sans faux pli.

De préférence, la partie latérale élastique 50 de la coiffe 52 comprend un tissu recevant une enduction de matière plastique. Pour permettre une bonne tenue de ce tissu sans risquer de vieillissement prématuré, la partie latérale élastique 50 reçoit dans la position du bourrelet 10 réduit, une pré-tension de l'ordre de 5%, et dans la position du bourrelet déployé, une tension de l'ordre de 50%.

## Revendications

1. Siège en particulier pour véhicule automobile, comprenant un dossier (4) fixé à l'assise du siège (2) par une articulation (14) permettant de replier ce dossier sur l'assise, le dossier comprenant des bourrelets latéraux (10) de maintien du passager qui dépassent vers l'avant de la partie centrale (6) du dossier pour former des parties saillantes, ce dossier comportant un mécanisme lié à l'articulation qui réalise une réduction des bourrelets lors du repliage du dossier, **caractérisé en ce que** les bourrelets latéraux (10) sont recouverts d'une coiffe (22, 52) en tissu, comportant un moyen de rétractation (26, 50) de cette coiffe lors de la réduction des bourrelets.

2. Siège avec dossier repliable selon la revendication 1, **caractérisé en ce que** le dossier (4) comprend une armature fixe (30), et une armature mobile (20) placée vers l'avant et supportant les bourrelets latéraux (10), cette armature mobile s'éloignant de l'armature fixe lorsque le dossier du siège est déplié.

3. Siège avec dossier repliable selon la revendication 1 ou 2, **caractérisé en ce que** les moyens de rétractation comprennent des tendeurs élastiques (26) fixés à l'intérieur de la coiffe (22) sur des parties latérales situées de part et d'autre du dossier (4), ces tendeurs reliant ensemble les deux côtés de cette coiffe avec une pré-tension.

4. Siège avec dossier repliable selon les revendications 2 et 3, **caractérisé en ce que** les tendeurs élastiques (26) sont fixés de chaque côté de la coiffe selon une ligne de fixation (24) suivant le plan du dossier (4), les tendeurs élastiques (26) passant entre les deux armatures fixe (30) et mobile (20).

5. Siège avec dossier repliable selon l'une des revendications 3 ou 4, **caractérisé en ce que** les tendeurs élastiques (26) comportent deux parties chacune fixée à un côté de la coiffe (22), ces deux parties étant reliées ensemble par une agrafe (28) au cours du montage de la coiffe.

6. Siège avec dossier repliable selon l'une des revendications 3 à 5, **caractérisé en ce que** le dossier (4) comprend deux tendeurs élastiques (26) répartis sensiblement à chaque tiers de la hauteur du dossier.

7. Siège avec dossier repliable selon l'une des revendications 3 à 6, **caractérisé en ce que** les tendeurs élastiques (26) sont liés à la coiffe (22), par un fourreau de renfort (40) comprenant une bande fixée à l'intérieur de la coiffe (22), sur des parties latérales situées de part et d'autre du dossier (4).

8. Siège avec dossier repliable selon l'une des revendications 1 ou 2, **caractérisé en ce que** la coiffe (52) comprend au moins pour les parties latérales du dossier (4), une matière extensible (50).

9. Siège avec dossier repliable selon la revendication 8, **caractérisé en ce que** la matière extensible (50) est un tissu recevant une enduction de matière plastique.

10. Siège avec dossier repliable selon l'une quelconque des revendications précédentes, **caractérisé en ce que** l'assise (2) du siège (1) est reliée au plancher du véhicule par un dispositif de fixation articulé (12), réalisant pendant le repli du dossier (4) un abaissement de cette assise de manière à la rapprocher du plancher.

## Claims

1. A seat, in particular for an automobile vehicle, comprising a backrest (4) fixed to the seat pan of the seat (2) by an articulation (14) allowing this backrest to be folded on the seat pan, the backrest comprising lateral rims (10), retaining the passenger, which protrude towards the front of the central part (6) of the backrest to form projecting parts, this backrest comprising a mechanism linked to the articulation, which carries out a reduction of the rims when the backrest is folded, **characterized in that** the lateral rims (10) are covered by a cover (22, 52) made of fabric, comprising a retraction means (26, 50) of this cover on reduction of the rims.

2. The seat with foldable backrest according to Claim 1, **characterized in that** the backrest (4) comprises a fixed frame (30) and a movable frame (20) placed towards the front and supporting the lateral rims (10), this movable frame moving away from the fixed frame when the backrest of the seat is unfolded.

3. The seat with foldable backrest according to Claim 1 or 2, **characterized in that** the retraction means comprise elastic tensioners (26) fixed to the interior of the cover (22) on lateral parts situated on either side of the backrest (4), these tensioners connecting together the two sides of this cover with a pretension.

4. The seat with foldable backrest according to Claims 2 and 3, **characterized in that** the elastic tensioners (26) are fixed on each side of the cover according to a fixing line (24) following the plane of the backrest (4), the elastic tensioners (26) passing between the two frames, fixed (30) and movable (20).

5. The seat with foldable backrest according to one of Claims 3 or 4, **characterized in that** the elastic tensioners (26) comprise two parts each fixed to one side of the cover (22), these two parts being connected together by a fastener (28) during the mounting of the cover.

6. The seat with foldable backrest according to one of Claims 3 to 5, **characterized in that** the backrest (4) comprises two elastic tensioners (26), distributed substantially at each third of the height of the backrest.

7. The seat with foldable backrest according to one of Claims 3 to 6, **characterized in that** the elastic tensioners (26) are linked to the cover (22) by a reinforcing sheath (40) comprising a band fixed to the interior of the cover (22), on lateral parts situated on either side of the backrest (4).

8. The seat with foldable backrest according to one of Claims 1 or 2, **characterized in that** the cover (52) comprises an extendible material (50), at least for the lateral parts of the backrest (4).

9. The seat with foldable backrest according to Claim 8, **characterized in that** the extendible material (50) is a fabric receiving a coating of plastic material.

10. The seat with foldable backrest according to any one of the preceding claims, **characterized in that** the seat pan (2) of the seat (1) is connected to the floor of the vehicle by an articulated fixing device (12), carrying out a lowering of this seat pan, during the folding of the backrest (4), so as to bring it closer to the floor.

## Patentansprüche

1. Sitz, insbesondere für Kraftfahrzeug, der eine Rückenlehne (4) aufweist, die an der Sitzfläche (2) durch ein Gelenk (14) befestigt ist, das es erlaubt, die Rückenlehne auf die Sitzfläche herunterzuklappen, wobei die Rückenlehne seitliche Wülste (10) zum Halten des Insassen aufweist, die zur Vorderseite des zentralen Teils (6) der Rückenlehne vorragen, um vorstehende Teile zu bilden, wobei diese Rückenlehne einen Mechanismus aufweist, der mit dem Gelenk verbunden ist, der eine Verringerung der Wülste beim Herunterklappen der Rückenlehne ausführt, **dadurch gekennzeichnet, dass** die seitlichen Wülste (10) mit einer Haube (22, 52) aus Stoff abgedeckt sind, die ein Rückziehmittel (26, 50) dieser Haube beim Verringern der Wülste aufweist.

2. Sitz mit faltbarer Rückenlehne nach Anspruch 1, **dadurch gekennzeichnet, dass** die Rückenlehne (4) einen stationären Beschlag (30) und einen beweglichen Beschlag (20) aufweist, der nach vorn platziert ist und die seitlichen Wülste (10) trägt, wobei sich dieser bewegliche Beschlag von dem stationären Beschlag wegbewegt, wenn die Rückenlehne des Sitzes aufgestellt wird.

3. Sitz mit herunterklappbarer Rückenlehne nach Anspruch 1 oder 2, **dadurch gekennzeichnet, dass** die Rückziehmittel elastische Spanner (26) aufweisen, die im Inneren der Haube (22) auf seitlichen Teilen befestigt sind, die zu beiden Seiten der Rückenlehne (4) liegen, wobei diese Spanner gemeinsam die zwei Seiten dieser Haube mit einer Vorspannung verbinden.

4. Sitz mit herunterklappbarer Rückenlehne nach den Ansprüchen 2 und 3, **dadurch gekennzeichnet, dass** die elastischen Spanner (26) auf jeder Seite der Haube entlang einer Befestigungslinie (24) entlang der Ebene der Rückenlehne (4) befestigt sind, wobei die elastischen Spanner (26) zwischen dem stationären Beschlag (30) und dem beweglichen Beschlag (20) durchgehen.

5. Sitz mit herunterklappbarer Rückenlehne nach einem der Ansprüche 3 oder 4, **dadurch gekennzeichnet, dass** die elastischen Spanner (26) zwei Teile aufweisen, die jeweils an einer Seite der Haube (22) befestigt sind, wobei diese zwei Teile miteinander durch eine Klammer (28) bei der Montage der Haube verbunden werden.

6. Sitz mit herunterklappbarer Rückenlehne nach einem der Ansprüche 3 bis 5, **dadurch gekennzeichnet, dass** die Rückenlehne (4) zwei elastische Spanner (26) aufweist, die im Wesentlichen an jedem Drittel der Höhe der Rückenlehne verteilt sind.

7. Sitz mit herunterklappbarer Rückenlehne nach einem der Ansprüche 3 bis 6, **dadurch gekennzeichnet, dass** die elastischen Spanner (26) mit der Haube (22) durch einen Verstärkungsmantel (40), der ein Band aufweist, das im Inneren der Haube (22) auf seitlichen Teilen, die sich zu beiden Seiten der Rückenlehne (4) befinden, befestigt ist, verbunden sind.

8. Sitz mit herunterklappbarer Rückenlehne nach einem der Ansprüche 1 oder 2, **dadurch gekennzeichnet, dass** die Haube (52) mindestens für die seitlichen Teile der Rückenlehne (4) ein dehnbares Material (50) aufweist.

9. Sitz mit herunterklappbarer Rückenlehne nach Anspruch 8, **dadurch gekennzeichnet, dass** das dehnbare Material (50) ein Stoff ist, der eine Plastikbeschichtung erhält.

10. Sitz mit herunterklappbarer Rückenlehne nach einem der vorhergehenden Ansprüche, **dadurch gekennzeichnet, dass** die Sitzfläche (2) des Sitzes (1) mit dem Fußboden des Fahrzeugs durch eine gelenkige Befestigungsvorrichtung (12) verbunden ist, die während des Herunterklappens der Rückenlehne (4) ein Senken dieser Sitzfläche derart ausführt, dass sie sich dem Boden nähert.
